(19) **Europäisches Patentamt**

**European Patent Office**

**Office européen des brevets**

(11) **EP 1 355 259 A2**

(12) **DEMANDE DE BREVET EUROPEEN**

(43) Date de publication:
**22.10.2003 Bulletin 2003/43**

(51) Int Cl.⁷: $G06K\ 9/00$

(21) Numéro de dépôt: **03354035.2**

(22) Date de dépôt: **17.04.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **17.04.2002 FR 0204804**

(71) Demandeur: **STMicroelectronics S.A.**
**92120 Montrouge (FR)**

(72) Inventeur: **Tisse, Christel-Loic**
**13380 Plan de Cuques (FR)**

(74) Mandataire: **de Beaumont, Michel**
**Cabinet Michel de Beaumont**
**1, rue Champollion**
**38000 Grenoble (FR)**

(54) **Determination de l'orientation des sillons d'une empreinte digitale**

(57)   L'invention concerne un procédé et un circuit de détermination de l'orientation de sillons d'une image numérique (I) représentant une empreinte digitale ou analogue, consistant pour chaque pixel de l'image à calculer une grandeur prenant en compte les pixels voisins dans toutes les directions, et à balayer l'image ligne à ligne de façon bidirectionnelle

Fig 2

**Description**

La présente invention concerne le domaine de la reconnaissance d'empreintes digitales qui constitue une technique biométrique parfaitement éprouvée pour l'identification d'un individu. L'invention concerne plus particulièrement les traitements à appliquer à des images numériques reproduisant des empreintes digitales pour en permettre la comparaison.

Les procédés et systèmes de reconnaissance d'empreintes digitales à partir d'images numériques font appel à diverses techniques de traitement d'image. Le but de ces traitements est, de façon générale, d'améliorer la définition de l'image et de détecter les positions de points caractéristiques, nommés minuties, de l'arrangement des lignes papillaires d'une empreinte digitale.

Parmi les traitements effectués sur les images numériques, l'invention concerne plus particulièrement une étape de détermination de l'orientation des sillons de l'empreinte digitale. Cette étape conduit au calcul d'une image directionnelle ayant pour but d'obtenir une image de l'orientation des sillons de l'empreinte. En d'autres termes, on attribue à chacun des pixels de l'image, l'orientation du sillon auquel il appartient.

Généralement, cette détermination tient compte de la résolution de l'image et, plus précisément, des largeurs minimale et maximale des sillons et des vallées de l'arrangement papillaire dans l'image numérique.

Une première méthode classique pour déterminer l'orientation des sillons d'une image numérique reproduisant une empreinte digitale consiste à calculer les gradients en chaque point de l'image dans deux directions orthogonales. L'orientation est ensuite déterminée en calculant la tangente du rapport des gradients, et ce pour chaque pixel de l'image. Généralement, on arrondit les calculs en tenant compte d'un nombre D limité de directions, par exemple huit.

Une deuxième méthode classique consiste à calculer, pour chaque pixel de l'image et pour un nombre D de directions choisi arbitrairement, la somme des différences entre le niveau de gris du pixel courant et les niveaux de gris des pixels qui l'entourent dans chaque direction. Si on se trouve sur un sillon, cette somme est maximale, si on est perpendiculaire à un sillon, cette somme est minimale. On choisit donc la valeur minimale obtenue parmi les D sommes calculées, et on attribue au pixel concerné l'orientation du sillon auquel il appartient. Pour permettre une telle détermination, le nombre de pixels pris en compte autour du pixel courant est déterminé en fonction des largeurs minimale et maximale possibles des sillons, donc de la taille et de la résolution de l'image numérique.

Cette méthode revient à appliquer, pour chaque pixel de l'image, et pour chacune de D directions (par exemple, huit), la formule suivante :

$$K(i,j) = d\left[\underset{d=0}{\overset{D-1}{MIN}}\left(\sum_{k=1}^{L}\left|C(i,j) - Cd(i_k, j_k)\right|\right)\right],$$

où :

d désigne la direction (d est compris entre 0 et D-1, ou entre 1 et D) ;

MIN désigne une fonction de sélection de la valeur de d correspondant à la direction pour laquelle la somme est minimale ;

K(i,j) est l'orientation du pixel de coordonnées cartésiennes (i,j) dans l'image directionnelle résultat, c'est-à-dire la valeur d attribuée au pixel ;

C(i,j) est l'intensité en niveau de gris du point (i,j) dans l'image d'origine pour lequel on applique la formule ;

L représente le nombre de pixels pris en compte pour l'application de la formule, c'est-à-dire le nombre de pixels sur une ligne de direction d contenant le point de coordonnées (i,j) ;

k est compris entre 1 et L, et identifie le pixel de la ligne de direction d contenant le point de coordonnées (i,j) ; et

$Cd(i_k, j_k)$ représente l'intensité (niveau de gris) de chaque pixel de rang k dans la ligne de direction d contenant le point de coordonnées (i,j).

Le nombre L (par exemple égal à 13) est, en pratique, déterminé en appliquant la relation suivante :

$$L = 2.Hd + 1,$$

où :

Hd = (Wmax - 1)/2 arrondi à l'entier supérieur ; et

Wmax représente la largeur moyenne maximale des sillons, en nombre de pixels dans l'image à traiter.

Que ce soit par la première ou la deuxième méthode, on obtient une image résultat, ou directionnelle, dans laquelle, pour chaque pixel, on a un code représentant une des D directions. Ce code peut être assimilé à un niveau de gris dans la mesure où il correspond généralement à un mot binaire ayant la même taille que le codage du niveau de gris (par exemple, un mot de 8 bits permettant de coder de 0 à 255), et qu'il pourrait servir à générer une image dont les niveaux de gris différencieraient les codes. Par conséquent, on fera parfois référence par la suite à des "niveaux de gris" pour désigner les valeurs données à des points d'une matrice correspondant à des pixels d'image, même si ces valeurs ne représentent pas à proprement parler des niveaux de gris de l'image d'origine.

Une fois l'image directionnelle obtenue, on détermine l'orientation moyenne de blocs b partitionnant cette image. La taille choisie pour les blocs est fixée par le nombre de pixels pris en compte autour du pixel courant pour déterminer la direction du sillon, lui-même fonction des largeurs minimale et maximale possibles (en nombre de pixels) d'un sillon d'empreinte digitale dans l'image considérée.

Pour chaque bloc b, on détermine la direction d qui apparaît le plus fréquemment dans ses pixels (parmi les D directions définies), en appliquant un calcul d'histogramme pour déterminer la direction qui revient le plus souvent dans le bloc concerné. Cela revient, pour chaque bloc b et pour chaque direction d, à appliquer la relation suivante :

$$\text{HIST}(d) = Pd/X,$$

où :

HIST représente la fonction histogramme discrète calculée ;
Pd représente le nombre de pixels du bloc de l'image directionnelle ayant la direction d, et
X représente le nombre total de pixels du bloc.

On obtient, pour chaque bloc, huit valeurs HIST et on choisit, comme orientation O(b) du bloc b, la direction d correspondant à la plus grande valeur. Cela revient à appliquer la formule suivante :

$$O(b) = d\left[\begin{array}{c} D-1 \\ \text{MAX}\bigl(\text{HIST}(d)\bigr) \\ d=0 \end{array}\right],$$

où :

MAX désigne une fonction de sélection de la valeur de d correspondant à la direction pour laquelle la fonction histogramme donne la valeur maximale.

Différents traitements classiques sont ensuite mis en oeuvre sur l'image originale pour déterminer de manière plus fiable, à l'aide de l'image d'orientation obtenue, les positions respectives des minuties et, par la même occasion, l'orientation de l'arrangement papillaire qui les entoure localement.

Un exemple d'application de la deuxième méthode ci-dessus est décrit dans l'article "Système automatique de reconnaissance d'empreintes digitales. Sécurisation de l'authentification d'une carte à puce" de Christel-Loïc Tisse, Lionel Martin, Lionel Torres et Michel Robert, paru en septembre 2001 dans GRETSI'01 proceedings, 10-11 septembre 2001, Toulouse (FR).

Un inconvénient évident de la première méthode est l'importance des calculs complexes à effectuer en particulier pour calculer les tangentes en chaque point de l'image.

Quant à la deuxième méthode, elle requiert un nombre important d'accès à une mémoire (ou zone mémoire) dans laquelle est stockée l'image d'origine.

De plus, que ce soit dans la première ou dans la deuxième méthode, on doit effectuer une deuxième série d'accès mémoire pour calculer les orientations moyennes des blocs à partir de l'image directionnelle mémorisée.

Le nombre d'accès mémoire important ralentit considérablement le traitement de l'image.

Par ailleurs, le grand nombre de pixels (plusieurs centaines dans chaque direction de l'image) rend irréaliste l'exécution des calculs par groupe de pixels en parallèle sur toute l'image. Or, dans des applications intégrées, il est souvent préférable de traiter des calculs répétitifs au moyen d'éléments en logique câblée plutôt qu'au moyen d'un processeur exécutant des instructions de calcul d'un programme logiciel.

L'invention vise à proposer un nouveau procédé de détermination des directions des sillons d'une empreinte digitale sous la forme d'une image numérique, qui pallie les inconvénients des méthodes connues.

L'invention vise plus particulièrement à proposer une solution qui soit particulièrement adaptée à une exécution matérielle des calculs.

L'invention vise en outre à minimiser le nombre d'accès mémoire nécessaire pour charger les niveaux de gris des pixels devant participer aux calculs.

Pour atteindre ces objets et d'autres, la présente invention prévoit un procédé de détermination de l'orientation de sillons d'une image numérique représentant une empreinte digitale ou analogue, consistant pour chaque pixel de l'image à calculer une grandeur prenant en compte les pixels voisins dans toutes les directions, et à balayer l'image ligne à ligne de façon bidirectionnelle.

Selon un mode de mise en oeuvre de la présente invention, les calculs d'orientation prennent en compte un nombre pair (L-1)/2 de pixels de part et d'autre du pixel courant dans un nombre D prédéterminé de directions, et on ne calcule pas l'orientation des pixels du pourtour de l'image sur (L-1)/2 pixels en hauteur et en largeur.

Selon un mode de mise en oeuvre de la présente invention, le procédé est mis en oeuvre au moyen d'un circuit de registres à décalage bidirectionnels autorisant un chargement en parallèle des mots de chaque registre.

L'invention prévoit également un circuit de stockage temporaire de blocs d'une image numérique, comprenant :

une matrice de V registres à décalage de U mots pour stocker un bloc d'image de U*V pixels ;

deux registres à décalage de chargement dans une première direction, lesdits deux registres pouvant chacun être déchargés en parallèle dans les premiers, respectivement derniers, mots de tous les registres de la matrice ; et au moins un registre à décalage de chargement dans l'autre direction, pouvant être déchargé en parallèle dans tous les mots du premier ou dernier registre de la matrice, les différents registres étant interconnectés de façon à permettre un chargement de l'image par blocs dans la première direction dans les deux sens et dans la deuxième direction.

Selon un mode de réalisation de la présente invention, la taille des mots correspond au nombre de bits sur lequel sont codés les niveaux de gris des pixels de l'image.

L'invention prévoit également un circuit de détermination de l'orientation de lignes dans une image numérique, comprenant un circuit de stockage temporaire, les sorties parallèles des registres de la matrice étant connectées à des entrées d'un premier circuit en logique câblé de calcul des orientations individuelles des pixels de l'image.

Selon un mode de réalisation de la présente invention, des sorties du premier circuit sont reliées à un ensemble de bascules de stockage temporaire des orientations individuelles, des sorties des bascules étant reliées à des entrées d'un deuxième circuit en logique câblée de calcul de l'orientation moyenne des blocs de l'image.

Selon un mode de réalisation de la présente invention, le circuit de détermination de l'orientation de lignes dans une image numérique comporte un circuit de commande en logique câblée.

Selon un mode de réalisation de la présente invention, le circuit de détermination de l'orientation de lignes dans une image numérique est appliqué à la détermination de l'orientation de sillons dans une image numérique représentant une empreinte digitale ou analogue.

Ces objets, caractéristiques et avantages, ainsi que d'autres de la présente invention seront exposés en détail dans la description suivante de modes de réalisation et de mise en oeuvre particuliers, faite à titre non-limitatif en relation avec les figures jointes parmi lesquelles :

la figure 1 représente schématiquement un mode de réalisation d'une matrice de stockage d'un bloc de pixel d'image selon la présente invention ;
la figure 2 illustre, par une vue schématique d'une image à traiter, un mode de mise en oeuvre du procédé selon l'invention ; et
la figure 3 représente, de façon très schématique et sous forme de blocs, un mode de réalisation d'un circuit de calcul des orientations moyennes de blocs d'une image numérique selon la présente invention.

Par souci de clarté, seuls les éléments du circuit de mémorisation et les étapes du procédé qui sont indispensables à la compréhension de l'invention ont été illustrés aux figures et seront décrits par la suite. En particulier, les étapes amont et aval de la détermination de l'orientation des sillons ne font pas l'objet de l'invention et n'ont pas été décrites. De plus, les étapes exécutant les calculs (somme, soustraction, etc.) proprement dits n'ont pas été détaillées et mettent en oeuvre des processus classiques. En outre, les circuits de mémorisation et d'adressage de l'image entière, qu'il s'agisse de l'image d'origine ou de l'image directionnelle, n'ont pas été illustrés et sont classiques.

Selon l'invention, on prévoit une matrice de mémorisation temporaire (par exemple, au moyen de registres) d'un bloc de l'image représentant l'arrangement papillaire dont on souhaite déterminer la direction moyenne, et un adressage spécifique de cette matrice de mémorisation, pour minimiser le nombre d'accès à une mémoire de stockage de l'image complète.

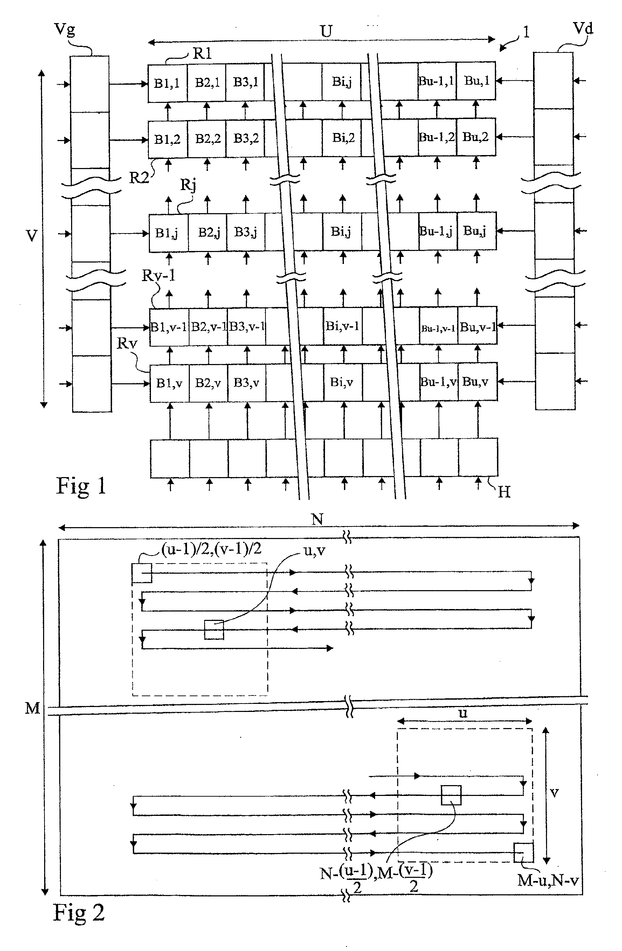

La figure 1 est une vue schématique et sous forme de blocs d'un circuit 1 de stockage temporaire de niveaux de gris de pixels d'une image à traiter selon la présente invention. Ce circuit comporte V registres à décalage bidirectionnel R1, R2, ..., Rj, ..., RV-1 et RV, capables de stocker chacun U mots B1j, B2j, ..., Bij, ..., BU-1j, BUj, représentatifs d'un niveau de gris de pixel. Par exemple, chaque mot est un mot de huit bits permettant de stocker 255 niveaux de gris. La taille de la matrice de mots mémoire ainsi constituée correspond, de préférence, à celle d'un bloc de l'image dont on souhaite déterminer l'orientation moyenne (U*V=X). Pour simplifier, on a utilisé les mêmes index i et j de colonne et de ligne que pour désigner les pixels dans l'image complète.

Les registres Rj sont chacun connectés de façon à autoriser un chargement et un déchargement en parallèle des X mots Bij. De plus, ils sont connectés pour que les X mots puissent être déchargés simultanément (en un seul cycle) vers des opérateurs (non représentés), de préférence en logique câblée, exécutant les calculs d'orientation.

L'ensemble de registres Rj est associé à trois registres de chargement, respectivement verticaux Vg et Vd et horizontal H. La taille (nombre de mots) des registres verticaux est V tandis que celle du registre horizontal est U. La référence aux orientations verticale et horizontale est prise dans l'orientation des figures, mais pourra bien entendu être inversée.

Les registres Vd, Vg et H sont à déchargement parallèle vers les registres Rj et, de préférence, à chargement parallèle depuis l'extérieur de la matrice 1, c'est-à-dire depuis la mémoire de stockage de l'image d'origine. En variante le chargement dans les registres Vd, Vg et H est un chargement série, c'est-à-dire que l'on utilise un cycle pour charger un mot dans un de ces registres. Le temps nécessaire n'est pas un obstacle pourvu de préserver un déchargement parallèle. En effet, le registre Vd, Vg ou H selon la position courante dans l'image d'origine peut être chargé mot par mot pendant les calculs opérés sur la matrice courante de pixels présente dans les registres Rj.

Pour simplifier, les différentes liaisons de commande en déclenchement du décalage et en chargement/déchargement des différents registres n'ont pas été illustrées en figure 1. On notera simplement que les registres verticaux Vg et Vd sont, de préférence, commandables en décalage vertical dans un seul sens, tandis que le registre horizontal H est commandable en décalage vers la droite ou vers la gauche, les registres Rj étant commandables en décalage dans toutes les directions.

Les calculs d'orientations de chaque pixel pour obtenir l'image directionnelle, et les calculs d'orientation moyenne des blocs sont effectués en une seule étape, c'est-à-dire, pour un bloc donné, sans nouvel accès à une mémoire de stockage. Pour cela, l'orientation individuelle de chaque pixel est, selon l'invention, déterminée en appliquant la deuxième méthode décrite précédemment. On tire alors profit du fait que, comme cela a été indiqué précédemment, la taille (largeur et longueur) des blocs correspond généralement au nombre de pixels pris en compte dans chaque direction pour déterminer l'orientation individuelle de chaque pixel selon cette méthode. Plus généralement, pour que cette caractéristique de l'invention soit respectée, il suffit que la taille des blocs soit inférieure au nombre de pixels pris en compte pour déterminer l'orientation individuelle de chaque pixel. En d'autres termes, il suffit que chaque bloc s'inscrive entièrement dans la matrice de stockage temporaire. A cet égard, on notera que la matrice de stockage est préférentiellement, mais pas obligatoirement, carrée (U=V). Il en est de même pour les blocs.

L'image d'origine, stockée en entier dans une mémoire ou zone mémoire non représentée, est balayée horizontalement et verticalement de pixel en pixel voisin avec un cheminement spécifique limitant encore le nombre d'accès à la mémoire stockant l'image entière.

La figure 2 représente une vue schématique d'une image I d'empreinte digitale à traiter en calcul d'orientation selon l'invention. L'image I est en fait stockée dans une mémoire vive (RAM) non représentée, accessible par le processeur de commande du système de reconnaissance d'empreinte. La mémoire stockant l'image I est dimensionnée en fonction de la taille de cette image pour en contenir les niveaux de gris respectifs de chacun des pixels. En figure 2, on suppose le cas d'une image de M lignes et N colonnes de pixels.

Les registres de chargement verticaux Vg et Vd et horizontal H servent à précharger une ligne respectivement colonne suivante pour balayer l'image complète I. Ainsi, selon une caractéristique de l'invention illustrée par le trajet en flèches de la figure 2, le traitement opéré sur les pixels de l'image est effectué en balayant cette image ligne à ligne. De plus, ce balayage ligne à ligne s'effectue en aller-retour, c'est-à-dire en changeant de sens (de gauche à droite ou de droite à gauche) à chaque ligne de pixels. C'est pour cette raison que l'on prévoit deux registres de chargement verticaux Vg et Vd selon le sens de parcours de la ligne courante. L'invention tire ici profit du fait que les calculs opérés et les résultats stockés n'ont pas besoin d'être dans un ordre particulier. C'est ce qui permet de se dispenser d'un balayage ligne à ligne dans un seul sens, comme ce serait le cas pour le traitement d'images à afficher. Selon l'invention, ce qui importe c'est de se décaler successivement d'une colonne à la colonne suivante puis en fin de colonne à la ligne suivante pour minimiser le nombre d'accès mémoire. Le fait de repartir dans l'autre sens à la fin d'une ligne courante pour traiter la ligne suivante ne constitue pas un obstacle pour les calculs effectués par l'invention. Au contraire, cela présente l'avantage considérable de ne pas devoir recharger, même en fin de ligne, une matrice complète de U*V pixels.

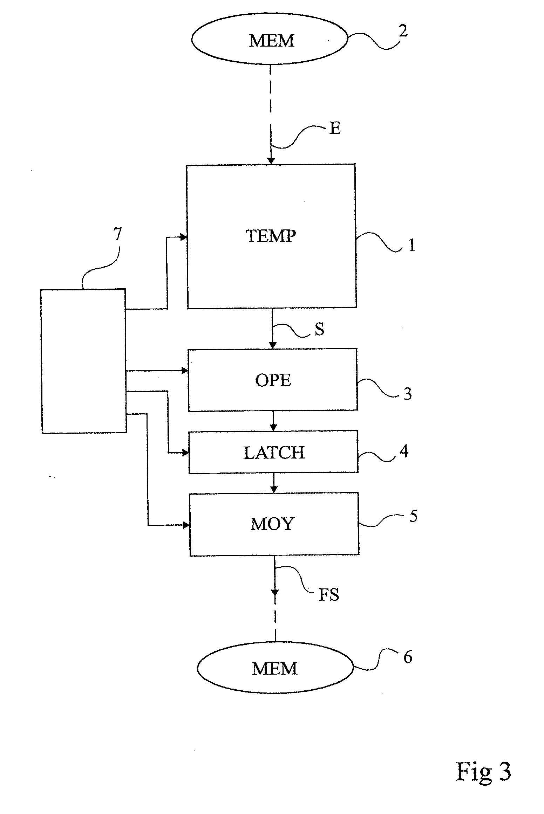

La figure 3 représente, de façon très schématique et sous forme de blocs, l'architecture d'un circuit de calcul des orientations moyennes de blocs d'une image selon un mode de réalisation de l'invention.

La matrice de stockage temporaire 1 (TEMP), dont les entrées (désignées globalement par la référence E en figure 3) reçoivent les niveaux de gris des pixels de l'image d'origine stockée dans une mémoire 2 (MEM), comporte autant (U*V) de sorties S qu'elle contient de mots.

Selon l'invention, chaque pixel ou mot Bij d'un registre Rj du circuit de stockage temporaire 1 est associé au calculateur nécessaire pour déterminer les orientations par application des formules classiques. En d'autres termes, les différents registres sont lus simultanément et en parallèle pour exécuter les opérations nécessaires au calcul de la formule suivante :

$$K(i, j) = d\left[\underset{d=0}{\overset{D-1}{\text{MIN}}}\left(\sum_{k=1}^{L}\left|C(i, j) - Cd(i_k, j_k)\right|\right)\right].$$

Toutes les opérations ci-dessus peuvent être effectuées au moyen d'un circuit 3 en logique câblée (OPE), si besoin équipé de portes de synchronisation (non représentées). Ces portes de synchronisation sont toutefois optionnelles pour le traitement de matrices carrées (U=V). La réalisation pratique du circuit 3 exécutant les opérations (additions, soustractions, comparaisons, etc.) nécessaires au calcul de la formule ci-dessus sont à la portée de l'homme du métier.

La formule est appliquée à chaque décalage d'un pixel dans le balayage. Par contre, le calcul de l'orientation moyenne des blocs n'est, de préférence, effectué que périodiquement, lorsque tous les calculs individuels sont disponibles. Pour cela, en aval des opérateurs (circuit 3) exécutant la formule précédente, on prévoit un ensemble 4 de bascules (LATCH), pour stocker les U*V orientations individuelles K des pixels. Les sorties des bascules 4 sont reliées à un deuxième circuit 5 en logique câblée de calcul de l'orientation moyenne (MOY). Pour des blocs non recouvrants (comme c'est le cas pour le traitement d'empreintes digitales), cela revient a exécuter, à partir des résultats intermédiaires stockés dans les bascules et toutes les U-1 colonnes et V-1 lignes (donc pour chaque bloc), les calculs de la formule suivante :

$$O(b) = d\left[\underset{d=0}{\overset{D-1}{\text{MAX}}}\left(\text{HIST}(d)\right)\right].$$

Le nombre d'applications de la formule ci-dessus est donc (U-1)*(V-1) moins fréquent que celui d'application de la formule de calcul d'orientation individuelle. Il n'est toutefois pas forcément gênant d'effectuer le calcul d'orientation moyenne d'un bloc de U*V pixel à chaque décalage, si cela ne prend pas trop de temps. Cela simplifie alors la synchronisation des calculs et il suffit de ne prendre en compte qu'un résultat toutes les U-1 colonnes et toutes le V-1 lignes.

Dans le cas de blocs se chevauchant partiellement, on adapte la périodicité du calcul d'orientation moyenne ou de sa prise en compte.

Le nombre de bascules du circuit 4 dépend de la taille des blocs et du nombre de bits codant chaque pixel.

Les résultats finaux, c'est-à-dire les orientations moyennes des blocs, fournis par des sorties FS du circuit 5, sont stockés dans une zone 6 (MEM) de mémoire vive externe au circuit 1. Cette zone est ensuite accessible, de façon classique par le processeur du système de reconnaissance d'empreintes. Le cas échéant, on pourra également stocker une image directionnelle contenant les orientations individuelles de tous les pixels.

Bien sûr, d'autres zones mémoires sont utilisées pour stocker d'autres images résultant de calculs intermédiaires classiques qui ne font pas l'objet de l'invention. Il s'agira par exemple, des différentes images issues de différents filtrages.

Une autre caractéristique de l'invention est de ne pas tenir compte des bords de l'image d'origine I pour le calcul de l'orientation individuelle des pixels. En effet, le calcul de l'orientation d'un pixel par rapport aux pixels qui l'entourent prend en compte les deux pixels de part et d'autre du pixel courant dans chaque direction d. Par conséquent, les calculs de bords seront de toute façon imprécis s'ils ne prennent pas en compte les L (par exemple, 13) pixels requis. En pratique, les résultats d'orientation sont inexploitables si le pixel courant n'est pas entouré, dans chacune des D directions d, des (L-1)/2 (par exemple, 6) pixels requis. En d'autres termes, en supposant des blocs de U*V pixels, on commence par charger les U*V premier pixels de l'image, et le premier pixel pour lequel on calcule l'orientation a pour coordonnées (U-1)/2, (V-1)/2 (figure 2). Quant au premier bloc pour lequel on détermine l'orientation moyenne, il s'agit du bloc centré sur le pixel de coordonnées U, V. En fin d'image, le dernier pixel pour lequel on calcule l'orientation est le pixel de coordonnées N-(U-1)/2, M-(V-1)/2 et le dernier bloc est centré sur le pixel de coordonnées M-U, N-V.

Un avantage qu'il y a à ne pas tenir compte des bords est que l'on évite le calcul et le chargement du pourtour de l'image, ce qui représente M*(U-1) + N*(V-1) cycles. De plus, cela n'est pas gênant dans la mesure où, outre l'imprécision mentionnée ci-dessus, les bords de l'image sont statistiquement les régions où la qualité de l'information (dessin des empreintes) est la moins bonne (zone de moindre contact entre le doigt et le capteur).

La gestion et le multiplexage des entrées du circuit 1 de registres et le stockage en chargement/déchargement dans la mémoire vive s'effectuent par des circuits et éléments classiques. De préférence, on prévoira un circuit logique 7 (CTRL) de commande, indépendant du processeur du système de reconnaissance d'empreintes, permettant une exécution en logique câblée de toutes les commandes. Ce circuit 7 commande alors les circuits 1, 3, 4 et 5. Ceci est rendu possible dans l'application de l'invention dans la mesure où l'image est connue à l'avance, de même que les tailles respectives des blocs à traiter.

A titre d'exemple particulier de réalisation, les blocs à traiter sont des blocs de 13*13 pixels et l'image complète représente 338*334 pixels. Un chargement systématique d'une matrice de 13*13 pixels pour l'image complète nécessiterait plus de 13 millions d'accès mémoire. Selon l'invention, seul un peu plus d'un million (1 028 352) d'accès mémoire est requis pour mettre en oeuvre le calcul. Côté bascules de stockage temporaire des orientations des pixels avant calcul de l'orientation moyenne des blocs, un chargement complet de l'image requerrait plus de 85 000 bascules. Selon l'invention, seul un peu plus de 200 bascules (208) suffisent.

Bien entendu, la présente invention est susceptible de diverses variantes et modifications qui apparaîtront à l'homme de l'art. En particulier, les tailles données à titre d'exemple pourront être modifiées pourvu de respecter les fonctionnalités d'un balayage bidirectionnel de l'image à traiter. De plus, la réalisation pratique du circuit de stockage 1, des circuits de calcul 3, 4, 5, et du circuit logique de commande 7 sont à la portée de l'homme du métier à partir des indications fonctionnelles données ci-dessus. En outre, bien que l'invention ait été décrite dans son application au traitement d'empreintes digitales, on notera que celle-ci s'applique plus généralement à tout calcul d'orientation de lignes dans une image numérique, compatible avec les contraintes rencontrées dans le cas des empreintes digitales.

## Revendications

1. Procédé de détermination de l'orientation de sillons d'une image numérique (I) représentant une empreinte digitale ou analogue, consistant pour chaque pixel de l'image à calculer une grandeur prenant en compte les pixels voisins dans toutes les directions, **caractérisé en ce qu'**il consiste à balayer l'image ligne à ligne de façon bidirectionnelle.

2. Procédé selon la revendication 1, dans lequel les calculs d'orientation prennent en compte un nombre pair (L-1)/2 de pixels de part et d'autre du pixel courant dans un nombre D prédéterminé de directions, **caractérisé en ce qu'**il consiste à ne pas calculer l'orientation des pixels du pourtour de l'image sur (L-1)/2 pixels en hauteur et en largeur.

3. Procédé selon la revendication 1 ou 2, **caractérisé en ce qu'**il est mis en oeuvre au moyen d'un circuit (1) de registres à décalage (Rj) bidirectionnels autorisant un chargement en parallèle des mots (Bij) de chaque registre.

4. Circuit (1) de stockage temporaire de blocs d'une image numérique (I), **caractérisé en ce qu'**il comprend :

   une matrice de V registres à décalage (Rj) de U mots (Bij) pour stocker un bloc d'image de U*V pixels ;
   deux registres à décalage (Vg, Vd) de chargement dans une première direction, lesdits deux registres pouvant chacun être déchargés en parallèle dans les premiers (B1j), respectivement derniers (BUj), mots de tous les registres (Rj) de la matrice ; et
   au moins un registre à décalage (H) de chargement dans l'autre direction, pouvant être déchargé en parallèle dans tous les mots (BiV) du premier (R1) ou dernier (RV) registre de la matrice, les différents registres étant interconnectés de façon à permettre un chargement de l'image par bloc dans la première direction dans les deux sens et dans la deuxième direction.

5. Circuit selon la revendication 4, **caractérisé en ce que** la taille des mots (Bij) correspond au nombre de bits sur lequel sont codés les niveaux de gris des pixels de l'image (I).

6. Circuit de détermination de l'orientation de lignes dans une image numérique (I), **caractérisé en ce qu'**il comprend un circuit (1) de stockage temporaire selon la revendication 4 ou 5, les sorties parallèles des registres (Rj) de la matrice étant connectées à des entrées d'un premier circuit (3) en logique câblé de calcul des orientations individuelle des pixels de l'image.

7. Circuit selon la revendication 6, **caractérisé en ce que** des sorties du premier circuit (3) sont reliées à un ensemble (4) de bascules de stockage temporaire des orientations individuelles, des sorties des bascules étant reliées à des entrées d'un deuxième circuit (5) en logique câblée de calcul de l'orientation moyenne des blocs de l'image.

8. Circuit selon la revendication 6 ou 7, **caractérisé en ce qu'**il comporte un circuit (7) de commande en logique câblée.

9. Circuit selon l'une quelconque des revendications 6 à 8, **caractérisé en ce qu'**il est appliqué à la détermination de l'orientation de sillons dans une image numérique (I) représentant une empreinte digitale ou analogue.

## Fig 1

Vg — U — 1 — Vd

R1

| B1,1 | B2,1 | B3,1 | | Bi,j | | Bu-1,1 | Bu,1 |

| B1,2 | B2,2 | B3,2 | | Bi,2 | | Bu-1,2 | Bu,2 |

R2

Rj

V

| B1,j | B2,j | B3,j | | Bi,j | | Bu-1,j | Bu,j |

Rv-1

| B1,v-1 | B2,v-1 | B3,v-1 | | Bi,v-1 | | Bu-1,v-1 | Bu,v-1 |

Rv

| B1,v | B2,v | B3,v | | Bi,v | | Bu-1,v | Bu,v |

H

## Fig 2

N

M

$(u-1)/2, (v-1)/2$    u,v

u

v

$N-\frac{(u-1)}{2}, M-\frac{(v-1)}{2}$    M-u, N-v

Fig 3